# EUROPEAN PATENT SPECIFICATION

(11) **EP 4 490 242 B1**
(45) Date of publication and mention of the grant of the patent: **12.08.2026**
(21) Application number: 23708510.5
(22) Date of filing: 07.03.2023
(51) Int. Cl.: C09J 111/00

(54) **ECO-FRIENDLY ADHESIVE FORMULATION CONTAINING 2-METHYL TETRAHYDROFURAN**
UMWELTFREUNDLICHE KLEBSTOFFORMULIERUNG, DIE 2-METHYLTETRAHYDROFURAN ENTHÄLT
FORMULATION ADHÉSIVE ÉCOLOGIQUE CONTENANT DU 2-MÉTHYL TÉTRAHYDROFURANE

(30) Priority: 11.03.2022 EP 22161713
(43) Date of publication of application: 15.01.2025
(73) Proprietor: ARLANXEO Deutschland GmbH, 41540 Dormagen (DE)
(72) Inventor: SCHNEIDER, Martin Ferdinand, 51147 Köln (DE); FRIESE, Regina Yvonne, 41569 Dormagen (DE)
(86) International application number: PCT/EP2023/055651
(87) International publication number: WO 2023/170014

(56) References cited:
- CA-A1- 2 527 561
- JP-A- 2003 226 852
- US-A1- 2020 216 722

## Description

### TECHNICAL FIELD

The present invention relates to an adhesive formulation preferably based on polychloroprene, comprising a preferably bio-based solvent or solvent mixture with a long open time together with a high solution viscosity. The adhesive formulation is eco-friendly.

Solvent borne contact adhesives have a long history and are known for their convenient handling. The adhesive can be easily applied, e.g. by brush or roller, the solvent has a degreasing effect, making the application more convenient in comparison to dispersion based systems and a high initial strength allows immediate use of the bonded parts without fixation.

Solvent borne contact adhesives can be applied in different ways: wet-in-wet bonding, heat or solvent reactivation or contact bonding. For the preferred way, contact bonding, the adhesive is applied to both adherends. After application, the solvent begins to evaporate. The minimum drying time is defined as the moment, when most of the solvent has evaporated and bonding is possible for the first time. Afterwards, the adherends can be joined within the open time (contact bonding time) with as high an applied pressure as possible (contact bonding process). The open time ends, when the adhesive layers are too dry to allow bonding by pressing together the two substrates. A feature of the contact adhesives is that joining within the open time produces an immediate bond with high initial strength. When using contact adhesives, there is no need for the adherends to be fixed.

Solvent borne contact adhesives can be based on a variety of polymers including polychloroprene, nitrile rubbers, polyurethanes, ethylene-propylene-diene-rubber, styrene-butadiene-styrene or styrene-isoprene-styrene blockcopolymers amongst others.

Solvent-based contact adhesives with polychloroprene as their basis are notable for bonding a variety of different substrates, high initial strength, long contact bonding time, good tack and autoadhesion, and also for resistance to chemicals, water, weathering and also ozone. They have therefore been established for many years in applications within the footwear, furniture, construction, do-it-yourself and automotive industries.

Suitable solvents for contact adhesives are typically organic solvents and mixtures thereof. They are, for example, chlorinated or unhalogenated aliphatic, aromatic or aliphatic-aromatic hydrocarbons, ketones or esters. In the beginning of polychloroprene based contact adhesives, chlorinated solvent were the first choice, later replaced by aromatic solvents for health reasons. Used with preference are cyclohexane, methyl cyclohexane, petroleum spirit, acetone, 2-butanone, ethyl acetate, propyl acetate and butyl acetate. The amounts of solvent or solvent mixture used are for example between 60-95 wt%, preferably 65-90 wt%, more preferably 70-85 wt%, based on the adhesive composition. Ageing inhibitors used are predominantly sterically hindered phenols such as Vulkanox BHT, for example.

One key property of solvent based contact adhesives is the open time. A long open time is mandatory for the convenient use of the solvent based adhesive. A long open time allows the application on a large area (e.g. during flooring or roofing). The entire area can be coated at the same time and the substrates can be applied afterwards. In addition, it is possible to prepare a large number of substrates, store them and join the substrates all at once afterwards. For those applications, an open time of at least 3,5 h is convenient.

Use of terpene phenolic resin to increase the open time is described in Handbook of Adhesives, Skeist I, Vol. 3, New York, 1990, p. 295. US 3 933 719 A teaches use of "resinous material having a softening point of 145 °C or higher which is obtained by polymerizing cracked oil fractions of crude petroleum or its distillation products" for this purpose. But both types of resin are not preferrable, as they cause a lower heat resistance, as for achieving a favourable heat strength alkyl phenolic resins are needed (Handbook of Adhesives, Skeist I, Vol. 3, New York, 1990, p. 295). US 3 488 315 A discloses the addition of halobutyl to the adhesive formulation to increase the open time, but the addition of another polymeric component is unfavourable, as compatibility issues can arise (phase separation). Additionally unwanted use of halogenated or aromatic solvents is needed (US 3 488 315 A, p 4). Furthermore the halobutyl decreases the polarity of the adhesive. With increasing halobutyl content the peel strength at ambient temperature decreases (US 3 488 315 A, p 6, fig IV).

The most important property during the application of the adhesive is the viscosity. Many end users prefer a high viscosity of the final adhesive to enable good spread without droplets, prevent unwanted flow and absorption of adhesive by porous substrates like foams. In addition, a high viscosity allows application of the adhesive to vertical or inclined surfaces without dripping. A viscosity above 7000 mPas is recognized as convenient for most applications.

To increase the viscosity, "Baypren adhesives product portfolio", ARLANXEO, Dormagen, 2021, teaches to use a base polymer with a higher molecular weight, but this is unfavourable, as it also increases the solvation time. Addition of higher shares of base polymer is also possible but can lead to solubility issues and is an unwanted waste of resources. JP 2003 226 852 A teaches to use methyl cyclohexane as a replacement for toluene and cyclohexane. But the achieved viscosities and open times are not sufficient.

CA 2 527 561 discloses solvent-containing compositions based on polychloroprene.

The known compositions are not satisfactory in each and every respect. There is a need in the market for a solvent based contact adhesive with a long open time of at least 3.5 h and a high viscosity of at least 7000 mPas. It is thus an object of the invention to provide improved compositions.

This object has been achieved by providing a composition comprising
- polychloroprene; and
- a first organic solvent, which is 2-methyl tetrahydrofuran.

Surprisingly it was found that use of 2-methyl tetrahydrofuran in contact adhesives is solving this issue. 2-methyl tetrahydrofuran is capable to dissolve polychloroprene as a single solvent and in mixture with other solvents. In addition, the adhesives prepared with 2-methyl tetrahydrofuran or mixtures of 2-methyl tetrahydrofuran with other solvents give the desired long open time in combination with a high viscosity of the adhesive.

Still further, it was surprisingly found that 2-methyl tetrahydrofuran, that is produced from waste of corn production can be used as a solvent for CR-based adhesives, offering a sustainable alternative to conventional solvents. 2-methyl tetrahydrofuran on its own or in combination with other (bio-based) solvents like ethyl acetate is not only able to dissolve CR, but is also giving an adhesive with a high viscosity and a long open time.

Long open time is important for convenient application of an adhesive.

High viscosity at a given polychloroprene concentration is favorable as it avoids unnecessary waste of resources and gives more economic formulations.

In particular, the technical object is achieved by using 2-Me-THF or mixtures of 2-Me-THF with other solvents as the solvent for the polychloroprene based adhesive. Mixtures of 2-Me-THF and ethyl acetate are preferred. Mixtures of 2-Me-THF and ethyl acetate in a ratio of 2-Me-THF (5 to 100 wt.-%) and ethyl acetate (0 to 95 wt.-%) are more preferred. Preferably the solvents are bio-based. E.g., 2-Me-THF and ethyl acetate are available from non-fossile sources which gives an added value for sustainable solutions for the future.

*Inter alia,* the invention provides a solvent borne, preferably bio-based solvent borne adhesive formulation with the convenient combination of a high viscosity with a long open time. Preferably, the compositions according to the invention exhibit a viscosity of > 7000 mPas and preferably > 7000 mPas and < 20000 mPas; or > 8000 mPas and preferably > 8000 mPas and < 20000 mPas (in every case at a temperature of 20 °C to 25 °C, preferably around 23 °C or more preferably exactly 23 °C), and/or an open time of > 3,5 h and preferably > 3,5 h and < 10,5 h; or > 5 h and preferably > 5 h and < 10,5 h.

The skilled person is aware of appropriate methods to determine viscosity and open time.

In a preferred embodiment, open time is determined by applying the composition on a DINA4, 160 g/m2 kraft paper with a doctor blade of 10 cm width and with a gap of width 200 µm. The paper is cut into 3 cm broad strips. With application, the solvent starts to evaporate. After preset time, the adhesive layer on the strips is pressed together. As long as the bonded paper cannot be separated without destroying the paper, the adhesive is within the open time. When the paper can be separated after joining, the open time is exceeded. The maximum open time of the adhesive is the time difference between application of the adhesive and the moment, when bonding was possible last.

In a preferred embodiment, solution viscosity of the compositions is measured with a Brookfield digital rotational viscosimeter LV DV II+, with spindle LV2 (62) and equipped with a guard leg. The composition is tempered to 23 °C and the measurement is done at 23 °C with the highest possible rotational speed. Result of the measurement is given in mPa*s

Thus, in a first aspect, the invention relates to a solvent borne contact adhesive composition comprising a solvent mixture comprising a first organic solvent, which is 2-methyl tetrahydrofuran, in an amount of 5 to 100 wt.-%, preferably 10 to 100 wt-%, based on the total weight of the solvent mixture. If the solvent mixture comprises the first organic solvent, which is 2-methyl tetrahydrofuran, in an amount of 100 wt-%, based on the total weight of the solvent mixture, the terms "solvent mixture" and "the first organic solvent, which is 2-methyl tetrahydrofuran" are synonyms.

### POLYCHLOROPRENE (PCP, CR)

Polychloroprene is also known as neoprene and is (commercially) available to the skilled person.

In connection with the present invention, the term polychloroprene preferably refers to polymers obtainable by emulsion polymerization of chloroprene (2-chloro-1,3-butadiene) alone or together with other monomers copolymerizable with chloroprene, such as, for example, 2,3-dichloro-1,3-butadiene, 1-chloro-1,3-butadiene, 1,3-butadiene, isoprene, acrylic acid, methacrylic acid, acrylonitrile, methacrylonitrile, sulfur and styrene. The fraction of these comonomers is typically not more than 25, preferably not more than 20, more preferably not more than 15 and most preferably not more than 10%, based on the total mass of the copolymer.

Suitable emulsifiers for the production of PCP are basically all compounds and mixtures thereof which sufficiently stabilize the emulsion, such as for example water-soluble salts, and in particular the sodium, potassium and ammonium salts of long-chain fatty acids, rosin and rosin derivatives, relatively high molecular weight alcohol sulphates, arylsulphonic acids, formaldehyde condensates of arylsulphonic acids, non-ionic emulsifiers based on polyethylene oxide and polypropylene oxide and emulsifying polymers such as polyvinyl alcohol (cf. e.g., US-A 2 234 215).

The preparation of polychloroprene is a long-established procedure. It is accomplished by radical emulsion polymerization in the alkaline aqueous medium, and predominantly at temperatures of 10 °C to 45 °C. The polymerization temperature has an influence on the microstructure of the resultant polymer. The lower the polymerization temperature, the higher the fraction of monomer units which are incorporated in trans configuration into the chain. The higher the proportion of monomer units in trans configuration, the higher the crystallization tendency of the polychloroprene.

The polymerization is halted at conversions of between 60% and 100%, and unconverted monomers are removed by devolatilization. To isolate the solid, the dispersion is first adjusted to a pH of 5.5-7.0 by addition of dilute acetic acid. The polychloroprene is recovered subsequently by deposition on the dispersion on a chilled roll (about -15°C) (freeze coagulation). The thin, frozen polychloroprene layer is thawed, washed, dried, gathered to form a strand and chopped into chips. Polychloroprene finds use in applications including rubber articles, and also in contact adhesives and sealants.

For the production of adhesives strongly crystallizing types of polychloroprene are predominantly used which can be obtained by emulsion polymerization at low temperatures (of lower than 15 °C). In addition polychloroprene with medium tendency to crystallize can be used, which are obtained by emulsion polymerization at temperatures between 15 and 40 °C. The adhesives produced therefrom produce adhesive bonds which have high initial strength and which set rapidly. These properties are particularly important in all cases where the adhesive bond is exposed to high material stresses, such as for example when bonding highly arched soles in the shoe industry or curved surfaces in the furniture industry, and especially when the bonded articles have to undergo rapid further processing, such as for example on a conveyor belt. Preferred types of polychloroprene to be used according to the invention have a solution viscosity (10% by weight in toluene) of 50 - 15,000 mPas at 23 °C.

In a preferred embodiment, the content of polychloroprene is at least 5 wt.-%, preferably 5 to 60 wt.-%, more preferably 10 to 40 wt.-%, yet more preferably 15 to 30 wt.-% in each case based on the total weight of the composition according to the invention. In another preferred embodiment, the content of polychloroprene is at most 10 wt.-% or at most 25 wt.-% or at most 50 wt.-% or at most 75 wt.-% or at most 90 wt.-%, in each case based on the total weight of the composition according to the invention.

In a preferred embodiment, the composition according to the invention is an adhesive composition and/or a sealant composition.

### SOLVENTS

The compositions according to the invention comprise a first organic solvent, which is 2-methyl tetrahydrofuran.

2-methyl tetrahydrofuran is also known as 2-Me-THF.

2-methyl tetrahydrofuran is represented by the following formula:

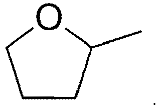

There are two enantiomers of 2-methyl tetrahydrofuran, namely the (R) enantiomer and the (S) enantiomer which are represented by the following formulae ((R) enantiomer to the left and (S) enantiomer to the right):

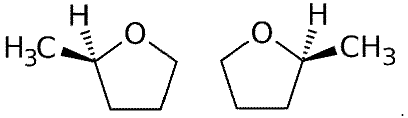

2-methyl tetrahydrofuran is (commercially) available to the skilled person.

In a preferred embodiment, 2-methyl tetrahydrofuran is understood to include the racemat, the (R) enantiomer and the (S) enantiomer.

In a preferred embodiment, the compositions according to the invention additionally comprise a second organic solvent, which is ethyl acetate.

In a preferred embodiment, the compositions according to the invention comprise a mixture of the first organic solvent, which is 2-methyl tetrahydrofuran and the second organic solvent, which is ethyl acetate, wherein
- the content of the first organic solvent, which is 2-methyl tetrahydrofuran is 5 to less than 100 wt.-%, based on the total weight of the mixture, and the content of the second organic solvent, which is ethyl acetate, is greater than 0 to 95 wt.-%, based on the total weight of the mixture; and
- the total amount of the first organic solvent, which is 2-methyl tetrahydrofuran, and of the second organic solvent, which is ethyl acetate, is preferably 100 wt.-%, based on the total weight of the solvent mixture.

In a preferred embodiment, the content of the first organic solvent, which is 2-methyl tetrahydrofuran, is at least 10 wt.-%, preferably 40 to 95 wt.-%, more preferably 60 to 90 wt.-%, yet more preferably 65 to 85 wt.-%, in each case based on the total weight of the composition according to the invention.

In a preferred embodiment, the total amount of the first organic solvent, which is 2-methyl tetrahydrofuran, and the second organic solvent, which is ethyl acetate, is at least 10 wt.-%, preferably 40 to 95 wt.-%, more preferably 60 to 90 wt.-%, yet more preferably 65 to 85 wt.-%, in each case based on the total weight of the composition according to the invention.

In a preferred embodiment, the first organic solvent, which is 2-methyl tetrahydrofuran, is bio-based and/or the second organic solvent, which is ethyl acetate, is bio-based.

In a preferred embodiment, the first organic solvent, which is 2-methyl tetrahydrofuran, is produced or obtained from non-fossile sources and/or the second organic solvent, which is ethyl acetate, is produced or obtained from non-fossile sources.

In a preferred embodiment, the first organic solvent, which is 2-methyl tetrahydrofuran, is produced or obtained from waste of corn production.

In a preferred embodiment, the compositions according to the invention comprise 2-methyl tetrahydrofuran as sole organic solvent.

In a preferred embodiment, the compositions according to the invention do not comprise a solvent in addition to the first organic solvent, which is 2-methyl tetrahydrofuran, and the second organic solvent, which is ethyl acetate.

However, in another preferred embodiment, the compositions according to the invention additionally comprise further solvents, i.e. solvents in addition to the first organic solvent, which is 2-methyl tetrahydrofuran. An optional second organic solvent is an alkylacetate, preferably ethyl acetate. Beyond or instead of alkylacetate, preferably ethyl acetate other organic solvents may be present. These further solvents are set forth in the following paragraphs.

Organic solvents are carbon-containing solvents. The polychloroprene types of adhesives are soluble in many organic solvents and solvent mixtures. In the compositions according to the invention the polychloroprene is therefore present, at least partially, in dissolved form. The solvent or solvent mixture to be used for the production of the adhesive is selected on the basis of commercial and technical factors, it being necessary to take into account, *inter alia,* that the solvent has a considerable effect on
- the viscosity of the adhesives,
- the processability, e.g. brushability
- the compatibility of the adhesives and optional crosslinking agent added,
- the properties of the adhesives on being stored at low temperatures,
- the occurrence of phase separation on storing resin-containing adhesives,
- the wetting of the surfaces to be bonded,
- the drying of the adhesive films,
- the contact adhesion time of the adhesive films, and
- the setting rate of the adhesive bonds.

Apart from the above effects on the technical properties of the adhesives, the physiological effect of the solvents and their flammability must also be taken into consideration.

Suitable solvents include polar and non-polar solvents. According to the invention, polar solvents are those whose solubility in water at 20 °C is higher than 0.1 % by weight, based on the quantity of the water. Such solvents include, for example, halogenated aliphatic hydrocarbons, aliphatic esters, such as alkylacetates like methyl acetate, ethyl acetate, n-butyl acetate etc. and aliphatic ketones, such as acetone, methyl ethyl ketone, etc. and alcohols, such as n-butanol. The polar solvents are preferably those which are miscible with aliphatic or aromatic hydrocarbons at room temperature without phase separation and preferably in any desired mixing ratio.

According to the invention, "non-polar solvents" are understood to be those which are essentially immiscible with water, i.e. whose solubility in water at 20 °C is less than 0.1% by weight, based on the quantity of the water. Conversely, for example, less than 0.1% by weight of water dissolves in such solvents at 20 °C. Preferred solvents/media are also those whose dielectric constant (DC) is < 5, and in particular those whose DC is < 3. The following can for example be used: aliphatic hydrocarbons and/or aromatic hydrocarbons having a variable chain length, degree of branching and molecular weight, paraffinic, naphthenic and aromatic oils and waxes and long-chain esters, alcohols, ketones, ethers, halogenated aliphatic and/or aromatic hydrocarbons and combinations/mixtures thereof. Aliphatic, branched, straightchain, cyclic or aromatic hydrocarbons, such as pentane, hexane, cyclohexane, methyl cyclohexane, heptane, octane, benzene, toluene, xylene, etc. and mixtures such as solvent naphtha or petrol are preferred.

According to the invention, mixtures of the abovementioned polar and non-polar solvents are particularly preferred. A preferred solvent mixture consists of aliphatic esters and/or ketones and aliphatic and/or aromatic hydrocarbons.

### OPTIONAL COMPONENTS

The polychloroprene compositions according to the invention can also optionally contain auxiliaries and/or additives commonly used for adhesives. Such auxiliaries and/or additives include for example the following:

### DISPERSANTS

Dispersants can be added to the compositions according to the invention.

Suitable dispersants are long-chain (C₅-C₂₀) carboxylic acids and sulphonic acids.

Preferred dispersants are long-chain (C₅-C₂₀) carboxylic acids, such as for example oleic acid. In addition, stabilizers such as for example monohydric or polyhydric alcohols or polyethers can be added to the compositions according to the invention.

A particularly preferred variant of the dispersants is one resulting from a reaction of a MgO with at least one phenolic resin. Phenolic resins are synthetic resins which are obtained by the condensation of phenols with aldehydes, and in particular formaldehyde, by derivatization of the resulting condensates or by the addition of phenols to unsaturated compounds, such as natural resins. The condensation products of phenols and aldehydes are preferably used. Preferably alkylphenols (cresols, xylenols, nonyl-, t-butyl- and octylphenol) and aryl derivatives and dihydric phenols are used in addition to phenol as the phenol component. Alkylphenol resins are particularly preferred.

### FILLERS

Fillers of the most diverse kinds can be added in any desired quantities to the polychloroprene adhesives. Highly filled mixtures are luting clays mainly of the gap-filling kind. Suitable fillers are for example kaolin, chalk, barite, quartz powder, asbestos powder, carbon black and silica.

Additives of about 50 to 100%, based on the polychloroprene or the polychloroprene rubber content, are commonly used. Kaolin or chalk are for example added to such adhesives. They are used for bonding floor coverings.

Carbon black and silica fillers increase the cohesive strength of the adhesive film, although carbon black can only be used in rare cases due to its colour. In too high quantities silica fillers impair the contact bonding, so that all-over bonding does not occur.

If the filler is however required to be distributed as finely as possible it should be incorporated using a roller - or even better - an internal mixer. Pasting in machines commonly used for coatings is also possible.

If the adhesives are to be coloured in any particular shade coloured pigments can be incorporated in the same way as the fillers.

### RESINS

By using solutions of the strongly crystallizing types of polychloroprene which merely contain metal oxides as additives, compounds of high strength are obtained even without any further additives.

These adhesives have rapid setting capacity. Their short contact adhesion period is however less advantageous.

By adding resins the contact adhesion period can be adjusted over a wide range and the setting time can be accelerated. The final state of the crystallization of polychloroprene is not substantially impaired by resins, so that high cohesive strength of the adhesive films is obtained. Liquid, plastic, hard and brittle resins exist. They can be used for increasing or decreasing the elasticity of the adhesive film to match the material to be bonded. The resins are soluble without producing any significant increase in viscosity. They can therefore be contained in the adhesive in relatively large quantities.

Numerous natural and synthetic resins, such as for example ethylene, glycerol and pentaerythritol esters of unmodified, hydrogenated and dimerized rosin fulfil the basic requirement of compatibility with polychloroprene solutions. The same applies to rosin esters modified by phenol resins, of the kind obtained from low molecular weight phenol/formaldehyde condensates and rosin followed by esterification, and to terpene phenol and cumarone resins. Particularly important is their compatibility with heat-reactive alkylphenol resins obtained from alkylphenols, such as for example butyl or octylphenol and formaldehyde in an alkaline medium, as already mentioned above.

In a preferred variant of the invention the composition preferably contains at least one additional polymer or resin. This resin is preferably an alkylphenol/formaldehyde resin of the kind obtainable for example on the market, such as Alresen^{®} PA 565, SP 134 (SI Group).

The resins are usually added in a quantity of about 10 to 50%, based on the polychloroprene or the polychloroprene rubber content, although they can also be used in higher quantities.

In order to prolong the contact adhesion period terpene phenol resins, lowmelting rosin esters and cumarone resins can above all be used. Rapid setting of the bonds, i.e. the quickest possible obtainment of the final strength, is obtainable with highmelting rosin esters or heat-reactive alkylphenol resins, although the contact adhesion period is reduced thereby.

### CHLORINATED RUBBER

When using terpene phenol resins, low-melting rosin esters and/or cumarone resins as tackifiers for producing polychloroprene adhesives it is possible to considerably increase the initial strength of the bonds by adding 5-10 parts of chlorinated rubber, such as Pergut^{®} S40.

Chlorinated rubber is preferably used.

### ANTI-AGEING AGENTS

Polychloroprene itself is considerably more resistant to ageing than many of the resins used for the production of adhesives. Since rosin esters, cumarone resins and terpene phenol resins are unsaturated compounds, they undergo oxidation over time. This is initially manifested by the embrittlement or softening of the adhesive layer in the peripheral zones of the bond and can finally result in the complete destruction of the adhesive bond. The addition of suitable antioxidants can counteract the ageing of polychloroprene adhesive bonds.

Sterically hindered phenols, such as Vulkanox^{®} KB, Vulkanox^{®} SKF, are optimally suitable for resin-containing polychloroprene adhesives. In a quantity of 2%, based on the polymer, these antioxidants provide effective protection and their tendency to discolour under the effect of light and contact is low.

In addition, ZnO may be added which acts as an anti-ageing agent, and in particular as an agent for absorbing HCI with the formation of ZnCl₂. Since catalyst for the undesired crosslinking of polychloroprene, MgO is preferably added which deactivates the ZnCl₂ with the formation of an oxychloride.

In a preferred embodiment, however, the compositions according to the invention do not comprise ZnO and/or MgO.

In a preferred embodiment, the compositions according to the invention do not comprise any metal oxides.

### CROSSLINKING AGENTS BASED ON POLYISOCYANATE

In the case of highly crystallizing types of polychloroprene the cohesive strength of the adhesive bond is considerably increased by its crystallization. This crystallization is however dependent on temperature. The adhesive films recrystallize under the effects of heat and thus decrease in strength. The resistance of the adhesive bonds to the effects of heat is improved if heat-reactive phenol resins are added to the adhesive. They increase the heat resistance to about 100-110 °C.

If higher heat resistance is required, it is advisable to add polyisocyanates, such as for example Desmodur, to the adhesive solution prior to its application. Due to the crosslinking which immediately begins on adding the polyisocyanate, the immediate strength of the adhesive bonds is increased and they set more rapidly. Furthermore, the addition of polyisocyanate improves adhesion to numerous substrates which are difficult to bond.

The adhesive to which polyisocyanate has been added must be applied within a few hours, before the reaction has advanced to such an extent that gel formation takes place.

### FURTHER ADDITIVES COMPRISING MAGNESIUM OR ZINC

The addition of magnesium oxide and zinc oxide to adhesives based on polychloroprene is known from the prior art. The presence of these metal oxides has an advantageous effect on the storability of the adhesives and on the stability of the adhesive bonds.

This effect is based on the fact that polychloroprene has a tendency to cleave off small quantities of hydrogen chloride during storage, for which the metal oxides serve as acceptors.

The addition of about 4% each of magnesium oxide and zinc oxide, based on the polychloroprene or the polychloroprene rubber content, has proven to be advantageous.

Instead of the oxides, the carbonates of these metals are occasionally also used; zinc carbonate has a more transparent appearance in the adhesive than zinc oxide.

### PREFERRED ADDITIVES

The compositions according to the invention preferably additionally contain an adhesive auxiliary component and/or an additive.

The compositions according to the invention may additionally contain a filler, a dispersant, a cross-linking agent, a coloured pigment, a metal oxide (e.g., ZnO or MgO), an anti-ageing agent, a polymer, a resin (e.g., a reactive phenol resin or an alkylphenol resin), a vulcanizing agent, a vulcanization accelerator, an anti-oxidant, a softening agent and/or a chlorinated rubber, preferably in each case in an amount of 5 to 50 wt.-%, more preferably 5 to 15 wt.-% or 15 to 30 wt.-%, in each case based on the total polychloroprene content, and/or on the total weight of the composition.

### FURTHER ASPECTS OF THE INVENTION

In a second aspect, the invention relates to a process for producing a composition, which comprises the following steps:
(a) providing polychloroprene;
(b) providing at least a portion, preferably the entire amount, of said 2-methyl tetrahydrofuran
   - in bio-based form, and/or
   - from non-fossile sources, and/or
   - from waste of corn production;
(c) optionally providing at least a portion, preferably the entire amount, of said ethyl acetate
   - in bio-based form, and/or
   - from non-fossile sources; and
(d) mixing the components according to steps (a), (b) and optionally (c).

In a preferred embodiment, the produced composition is an adhesive and/or sealant composition.

Machines of the most diverse types may be used for the production of the compositions according to the invention. In principle the machines employed are stirring or kneading devices in which the components of the adhesives are comminuted and dissolved.

In a preferred variant of the invention, when producing the compositions according to the invention, only a portion - approximately 80% or 90% - of the total specified quantity of solvent(s) is initially introduced into the dissolving machine so that the required viscosity can be adjusted after the production process by adding the remaining solvent(s). Polychloroprene and optionally fillers, resins and anti-ageing agents, are added in succession with stirring to the initially introduced solvent(s).

In a third aspect, the invention relates to the use of the compositions according to the invention as an adhesive and/or sealant.

In a fourth aspect, the invention relates to a process for producing bonded substrates, which comprises the following steps:
- providing a first substrate;
- applying a composition according to the invention to a surface of the first substrate to obtain a coated first substrate;
- providing a second substrate;
- optionally applying a composition according to the invention to a surface of the second substrate to obtain a coated second substrate; and
- bonding the first coated substrate to the optionally coated second substrate.

In a fifth aspect, the invention relates to bonded substrates obtained by aforementioned process.

The definitions and preferred embodiments provided in the context of the first aspect of the invention apply in the context of the second to the fifth aspect of the invention as well.

### APPLICATIONS

The application of the adhesive formulations can be carried out in the known manner, for example by brushing, pouring, knife-coating, spraying, rolling or dipcoating. The drying of the adhesive film can be carried out at room temperature or at an elevated temperature.

The formulations according to the invention can be used as adhesives, for example for bonding any desired substrates of identical or different types, such as wood, paper, plastics, textiles, leather, rubber or inorganic materials, such as ceramics, metals, stoneware, glass fibres or cement.

Contact adhesives based on polychloroprene are predominantly solvent containing adhesives which are applied to both parts to be bonded and allowed to dry. By then joining both parts under pressure a bond having high strength at room temperature and, after potentially adding corresponding high-melting resins, also at elevated temperatures (heat resistance), is obtained.

It is understandable that adhesives allowing such an uncomplicated and rapidly performed adhesion process are of extreme commercial importance. Polychloroprene adhesives are therefore used in all fields, e.g. in the shoe or furniture industry, where articles are to be produced in small numbers or where articles are produced in large numbers in various shapes or sizes according to individual requirements. Similarly, one main field of use is for example the building industry or shipyards, where bonding processes have to be carried out on site without the use of complicated machines, i.e. in the form of assembly work such as interior fittings or the laying of floor coverings.

### EXAMPLES

The following examples further illustrate the invention but are not to be construed as limiting its scope:

### Production of the adhesive compositions:

The adhesive compositions were produced in a direct dissolution process. For this process, all of the solid constituents, apart from polychloroprene and the ethylene-vinyl acetate copolymers, were charged to a closable container, the solvents were weighed in, and then the polychloroprene was added. Dissolution was done with 4.5 cm dissolver disc at 23 °C with 1000 rpm.

### Ingredients for the adhesive composition:

Baypren 320-2 polychloroprene (rapid crystallization) from ARLANXEO
SFP-121H: alkyl-phenolic resin from SI Group
Rhenofit D/A: magnesium oxide (MgO) from RheinChemie
Zinc oxide, active: zinc oxide (ZnO) from LANXESS
Antioxidant: 6PPD (Vulkanox 4020 LG) from Lanxess
2-methyl tetrahydrofuran: Viridisol M (biobased 2-methyl tetrahydrofuran) from Pennakem
Ethyl acetate: biobased ethyl acetate from Helm AG
n-hexane, cyclohexane, methyl cyclohexane and toluene from Merck.

### Viscosity measurement:

Solution viscosity of the compositions is measured with a Brookfield digital rotational viscosimeter LV DV II+, with spindle LV2 (62) and equipped with a guard leg. The composition is tempered to 23 °C and the measurement is done at 23 °C with the highest possible rotational speed. Result of the measurement is given in mPa*s.

### Determination of open time:

Open time is determined by applying the composition on a DINA4, 160 g/m2 kraft paper with a doctor blade of 10 cm width and with a gap of width 200 µm. The paper is cut into 3 cm broad strips. With application, the solvent starts to evaporate. After preset time, the adhesive layer on the strips is pressed together. As long as the bonded paper cannot be separated without destroying the paper, the adhesive is within the open time. When the paper can be separated after joining, the open time is exceeded. The maximum open time of the adhesive is the time difference between application of the adhesive and the moment, when bonding was possible last.

### Results:

**Table 1: Inventive Examples**

| **Components** | **Exp 1** | **Exp 2** | **Exp 3** | **Exp 4** | **Exp 5** | **Exp 6** | **Exp 7** |
|---|---|---|---|---|---|---|---|
| Baypren 320-2 | 100 | 100 | 100 | 100 | 100 | 100 | 100 |
| magnesium oxide | 4 | 4 | 4 | 4 | 4 | 4 | 4 |
| zinc oxide | 5 | 5 | 5 | 5 | 5 | 5 | 5 |
| SFP 121H | 30 | 30 | 30 | 30 | 30 | 30 | 30 |
| anti oxidant | 2 | 2 | 2 | 2 | 2 | 2 | 2 |
| n-hexane | | | | | | 88 | 110 |
| ethyl acetate | | 220 | 352 | 400 | 420 | 176 | 220 |
| Acetone | | | | | | 88 | |
| 2-MeTHF | 440 | 220 | 88 | 40 | 20 | 88 | 110 |
| Total | 581 | 581 | 581 | 581 | 581 | 581 | 581 |
| | | | | | | | |
| solid content / wt.-% | 0,24 | 0,24 | 0,24 | 0,24 | 0,24 | 0,24 | 0,24 |
| polychloroprene content / wt.-% | 0,17 | 0,17 | 0,17 | 0,17 | 0,17 | 0,17 | 0,17 |
| | | | | | | | |
| maximum open time / h | 10 | 6 | 5 | 4 | 4 | 10 | 5 |
| viscosity / mPa*s | 19380 | 14160 | 12540 | 12800 | 11080 | 7004 | 7920 |

**Tables 2: Comparative Examples (Examples from JP 2003 226 852)**

| **Components** | **comp Exp 1** | **comp Exp 2** | **comp Exp 3** | **comp Exp 4** | **comp Exp 5** |
|---|---|---|---|---|---|
| Baypren 320-2 | 100 | 100 | 100 | 100 | 100 |
| magnesium oxide | 4 | 4 | 4 | 4 | 4 |
| zinc oxide | 5 | 5 | 5 | 5 | 5 |
| SFP 121H | 30 | 30 | 30 | 30 | 30 |
| anti oxidant | 2 | 2 | 2 | 2 | 2 |
| Methylcyclohexane | 88 | 110 | | | |
| n-hexane | 88 | 110 | 88 | 110 | 110 |
| ethyl acetate | 176 | 220 | 176 | 220 | 220 |
| Toluene | | | | | 110 |
| Cyclohexane | | | 88 | 110 | |
| Acetone | 88 | | 88 | | |
| Total | 581 | 581 | 581 | 581 | 581 |
| | | | | | |
| solid content / wt.-% | 0,24 | 0,24 | 0,24 | 0,24 | 0,24 |
| polychloroprene content / wt.-% | 0,17 | 0,17 | 0,17 | 0,17 | 0,17 |
| | | | | | |
| maximum open time / h | 8 | 8 | 8 | 7 | 3 |
| viscosity / mPa*s | 5810 | 6900 | 6140 | 6730 | 7970 |

It becomes evident that the compositions according to the invention exhibit a long open time in combination with a high solution viscosity, whereas the compositions according to JP 2003 226 852 do not exhibit such advantageous combination.

### FURTHER REMARKS

Further, plural elements, ingredients, components or steps can be provided by a single integrated element, ingredient, component or step. Alternatively, a single integrated element, ingredient, component or step might be divided into separate plural elements, ingredients, components or steps. The disclosure of "a" or "one" to describe an element, ingredient, component or step is not intended to foreclose additional elements, ingredients, components or steps.

Still further, the use of the terms "comprising" or "including" to describe combinations of elements, ingredients, components or steps herein also contemplates embodiments that consist of, or consist essentially of the elements, ingredients, components or steps.

## Claims

1. A composition comprising
- polychloroprene; and
- a first organic solvent, which is 2-methyl tetrahydrofuran.

2. The composition according to claim 1, which additionally comprises a second organic solvent, which is ethyl acetate.

3. The composition according to claim 1 or 2, wherein the first organic solvent, which is 2-methyl tetrahydrofuran, is produced or obtained from waste of corn production.

4. The composition according to any one of the preceding claims, which exhibits
- a viscosity measured with a Brookfield digital rotational viscosimeter LV DV II+, with spindle LV2 (62) and equipped with a guard leg of > 7000 mPas at a temperature of 23 °C, and/or
- an open time of > 3,5 h determined according to the experimental part of the specification.

5. The composition according to any one of the preceding claims 1 to 4, which is or comprises a solvent borne contact adhesive composition comprising polychloroprene and a solvent component comprising a first organic solvent, which is 2-methyl tetrahydrofuran, in an amount of 5 to 100 wt.-%, based on the total weight of the solvent component.

6. A process for producing a composition according to any one of the preceding claims 1 to 5 which comprises the following steps:
**(a)** providing polychloroprene;
**(b)** providing at least a portion of 2-methyl tetrahydrofuran
- in bio-based form, and/or
- from non-fossile sources, and/or
- from waste of corn production;
**(d)** mixing the components according to steps **(a)** and **(b).**

7. The process according to claim 6, comprising the following steps:
**(c)** providing at least a portion of ethyl acetate
- in bio-based form, and/or
- from non-fossile sources; and
**(d')** mixing the components according to steps **(a), (b)** and **(c)**.

8. Use of the composition according to any one of claims 1 to 5 as an adhesive and/or sealant.

9. The use according to claim 8, wherein the composition is configured for bonding substrates of identical or different types and which contain wood, paper, plastics, textiles, leather, rubber and/or inorganic materials.

10. A process for producing bonded substrates, which comprises the following steps:
- providing a first substrate;
- applying a composition according to any one of claims 1 to 5 to a surface of the first substrate to obtain a coated first substrate;
- providing a second substrate;
- bonding the first coated substrate to the second substrate.

11. Bonded substrates obtained by the process according to claim 10.

## Patentansprüche

1. Zusammensetzung, umfassend
- Polychloropren und
- ein erstes organisches Lösungsmittel, bei dem es sich um 2-Methyltetrahydrofuran handelt.

2. Zusammensetzung nach Anspruch 1, die zusätzlich ein zweites organisches Lösungsmittel umfasst, bei dem es sich um Essigsäureethylester handelt.

3. Zusammensetzung nach Anspruch 1 oder 2, wobei das erste organische Lösungsmittel, bei dem es sich um 2-Methyltetrahydrofuran handelt, aus Abfällen der Maisproduktion hergestellt oder erhalten wird.

4. Zusammensetzung nach einem der vorhergehenden Ansprüche mit
- einer mit einem digitalen Brookfield-Rotationsviskosimeter LV DV II+ mit Spindel LV2 (62) und mit Schutzbügel gemessenen Viskosität von > 7000 mPas bei einer Temperatur von 23 °C und/oder
- einer offenen Zeit von > 3,5 h, bestimmt gemäß dem experimentellen Teil der Patentschrift.

5. Zusammensetzung nach einem der vorhergehenden Ansprüche 1 bis 4, die eine lösungsmittelhaltige Kontaktklebstoffzusammensetzung ist oder umfasst, umfassend Polychloropren und eine Lösungsmittelkomponente, die ein erstes organisches Lösungsmittel, bei dem es sich um 2-Methyltetrahydrofuran handelt, in einer Menge von 5 bis 100 Gew.-%, bezogen auf das Gesamtgewicht der Lösungsmittelkomponente, umfasst.

6. Verfahren zur Herstellung einer Zusammensetzung nach einem der vorhergehenden Ansprüche 1 bis 5, das die folgenden Schritte umfasst:
(a) Bereitstellen von Polychloropren;
(b) Bereitstellen von mindestens einen Teil von 2-Methyltetrahydrofuran
- in biobasierter Form und/oder
- aus nichtfossilen Quellen und/oder
- aus Abfällen der Maisproduktion;
(d) Mischen der Komponenten gemäß den Schritten (a) und (b).

7. Verfahren nach Anspruch 6, das die folgenden Schritte umfasst:
(c) Bereitstellen von mindestens einem Teil von Essigsäureethylester
- in biobasierter Form und/oder
- aus nichtfossilen Quellen und
(d') Mischen der Komponenten gemäß den Schritten (a), (b) und (c).

8. Verwendung der Zusammensetzung nach einem der Ansprüche 1 bis 5 als Klebstoff und/oder Dichtstoff.

9. Verwendung nach Anspruch 8, wobei die Zusammensetzung zum Verkleben von Substraten gleicher oder unterschiedlicher Art, die Holz, Papier, Kunststoffe, Textilien, Leder, Kautschuk und/oder anorganische Materialien enthalten, ausgelegt ist.

10. Verfahren zur Herstellung von verklebten Substraten, das folgende Schritte umfasst:
- Bereitstellen eines ersten Substrats;
- Aufbringen einer Zusammensetzung nach einem der Ansprüche 1 bis 5 auf eine Oberfläche des ersten Substrats unter Erhalt eines beschichteten ersten Substrats;
- Bereitstellen eines zweiten Substrats;
- Verkleben des ersten beschichteten Substrats mit dem zweiten Substrat.

11. Verklebte Substrate, erhalten durch das Verfahren nach Anspruch 10.

## Revendications

1. Composition comprenant
- du polychloroprène ; et
- un premier solvant organique qui est le 2-méthyltétrahydrofurane.

2. Composition selon la revendication 1, qui comprend en outre un deuxième solvant organique, qui est l'acétate d'éthyle.

3. Composition selon la revendication 1 ou 2, dans laquelle le premier solvant organique, qui est le 2-méthyltétrahydrofurane, est produit ou obtenu à partir de déchets de la production de maïs.

4. Composition selon l'une quelconque des revendications précédentes, qui présente
- une viscosité mesurée avec un viscosimètre rotatif numérique Brookfield LV DV II+, avec une tige LV2 (62) et muni d'une jambe de garde de > 7 000 mPas à une température de 23 °C, et/ou
- un temps ouvert de > 3,5 h déterminé conformément à la partie expérimentale de la description.

5. Composition selon l'une quelconque des revendications précédentes 1 à 4, qui est ou comprend une composition d'adhésif de contact à base de solvant comprenant du polychloroprène et un composant solvant comprenant un premier solvant organique, qui est le 2-méthyltétrahydrofurane, en une quantité de 5 à 100 % en poids, par rapport au poids total du composant solvant.

6. Procédé de production d'une composition selon l'une quelconque des revendications 1 à 5 précédentes, qui comprend les étapes suivantes :
(a) fourniture du polychloroprène ;
(b) fourniture d'au moins une partie de 2-méthyltétrahydrofurane
- sous forme biosourcée, et/ou
- provenant de sources non fossiles, et/ou
- provenant de déchets de la production de maïs ;
(d) mélange des composants selon les étapes (a) et (b).

7. Procédé selon la revendication 6, comprenant les étapes suivantes :
(c) fourniture d'au moins une partie d'acétate d'éthyle
- sous forme biosourcée, et/ou
- provenant de sources non fossiles ; et
(d') mélange des composants selon les étapes (a), (b) et (c).

8. Utilisation de la composition selon l'une quelconque des revendications 1 à 5 comme adhésif et/ou agent d'étanchéité.

9. Utilisation selon la revendication 8, dans laquelle la composition est configurée pour lier des substrats de types identiques ou différents et qui contiennent du bois, du papier, des matières plastiques, des textiles, du cuir, du caoutchouc et/ou des matières inorganiques.

10. Procédé de production de substrats liés, qui comprend les étapes suivantes :
- fourniture d'un premier substrat ;
- application d'une composition selon l'une quelconque des revendications 1 à 5 sur une surface du premier substrat pour obtenir un premier substrat revêtu ;
- fourniture d'un deuxième substrat ;
- liaison du premier substrat revêtu au deuxième substrat.

11. Substrats liés obtenus par le procédé selon la revendication 10.
